(19) **Europäisches Patentamt / European Patent Office / Office européen des brevets**

(11) **EP 1 903 067 A1**

(12) # EUROPEAN PATENT APPLICATION
published in accordance with Art. 153(4) EPC

(43) Date of publication:
**26.03.2008 Bulletin 2008/13**

(51) Int Cl.:
**C08G 63/199** *(2006.01)*    **C08G 63/85** *(2006.01)*
**C08L 67/02** *(2006.01)*    **C08L 69/00** *(2006.01)*

(21) Application number: **06767935.7**

(22) Date of filing: **06.07.2006**

(86) International application number:
**PCT/JP2006/313476**

(87) International publication number:
**WO 2007/007631 (18.01.2007 Gazette 2007/03)**

(84) Designated Contracting States:
**DE**

(30) Priority: **12.07.2005 JP 2005203629**
**19.10.2005 JP 2005304321**

(71) Applicant: **Mitsubishi Chemical Corporation**
**Minato-ku**
**Tokyo 108-0014 (JP)**

(72) Inventors:
• **KASAI, Atsushi**
**Mie 5108530 (JP)**

• **NUKUI, Masahiro**
**Mie 5108530 (JP)**
• **TANAKA, Tomohiko**
**Mie 5108530 (JP)**
• **FUJIMURA, Atsushi**
**Mie 5108530 (JP)**

(74) Representative: **HOFFMANN EITLE**
**Patent- und Rechtsanwälte**
**Arabellastrasse 4**
**81925 München (DE)**

(54) **ALICYCLIC POLYESTER, PROCESS FOR PRODUCING THE SAME, AND RESIN COMPOSITION**

(57)    A subject of the present invention is to provide an alicyclic polyester which is suitably used as an optical material, exhibits a less coloration and good heat stability and hydrolysis stability, and contains a less amount of impurities; and a resin composition composed of the alicyclic polyester and a polycarbonate.

An alicyclic polyester produced from a dicarboxylic acid component comprising an alicyclic dicarboxylic acid as a main component and a diol component comprising an alicyclic diol as a main component using a titanium compound and an alkali earth metal compound as a polycondensation catalyst,

a content of titanium in the alicyclic polyester being not less than 1 ppm by weight and less than 25 ppm by weight, calculated as a titanium metal atom,

a ratio of an alkali earth metal (M) to titanium (Ti) (M/Ti) being 0.25 to 1.0, calculated as the respective metal atoms, and

the alicyclic polyester having an intrinsic viscosity of not less than 0.4 dL/g; and a resin composition comprising the above alicyclic polyester and a polycarbonate.

EP 1 903 067 A1

**Description**

FIELD OF THE INVENTION

The present invention relates to an alicyclic polyester comprising an alicyclic dicarboxylic acid component and an alicyclic diol component as main components, and more particularly, to an alicyclic polyester produced by polymerizing the alicyclic dicarboxylic acid component and alicyclic diol component using a titanium-based catalyst and an alkali earth metal-based catalyst which is excellent in transparency, hue and heat resistance; a process for producing the alicyclic polyester; and a resin composition containing the alicyclic polyester.

RELATED ARTS

Various polyester resins are capable of being formed into films, fibers, shaped products, etc., by various molding methods and, therefore, have been extensively used in various application fields. Among these polyester resins, alicyclic polyesters obtained from a dicarboxylic acid component mainly comprising an alicyclic dicarboxylic acid, in particular, 1,4-cyclohexanedicarboxylic acid (hereinafter occasionally referred to merely as "1,4-CHDA"), and a diol component mainly comprising an alicyclic diol as raw materials have now been more and more spread in application fields because of excellent transparency, heat resistance and weather resistance thereof. In particular, the alicyclic polyesters are expected to provide a good optical material.

It is generally known that when producing polyesters from a dicarboxylic acid component and a diol component, a titanium compound is used as a polycondensation catalyst therefor. However, the use of the titanium compound tends to cause yellowing of the resultant polyesters. Therefore, the improvement has been demanded. In addition, polyesters produced using the titanium catalyst tend to suffer from undesired coloration or reduction in molecular weight thereof when melt-blended with other resins. In this regard, the improvement is also demanded.

In order to prevent the coloration of the polyesters, it is desired that an amount of the titanium compound used is reduced. However, when alicyclic polyesters (hereinafter occasionally referred to merely as "PCCD") are produced by subjecting dimethyl 1,4-cyclohexanedicarboxylate (hereinafter occasionally referred to merely as "1,4-DMCD") as a dicarboxylic acid component and 1,4-cyclohexanedimethanol (hereinafter occasionally referred to merely as "1,4-CHDM") as an alicyclic diol component to transesterification reaction and then polycondensation reaction, the titanium compound must be used in a very large amount. For example, it is known that the titanium catalyst is used in an amount as large as 200 ppm, calculated as a titanium atom (U.S. Patent No. 5,986,040).

Further, there has been proposed the method of polycondensing a polyester in the presence of a catalyst system using a titanium compound in combination with the other metal compound as a co-catalyst (catalyst assistant) in which an amount of titanium used is as small as 1 to 10 ppm (Japanese Patent Application Laid-open (KOKAI) No. 53-25696). However, in this method, since the co-catalyst such as Mn is used instead of reducing the amount of titanium used, the resultant polyester tends to be insufficient and unsatisfactory in thermal stability, in particular, when alloyed with other resins.

On the other hand, there is known PCCD produced from 1,4-CHDA and 1,4-CHDM. The PCCD can be produced using a smaller amount of the catalyst as compared to the case where 1,4-DMCD is used as the raw material. However, this method also required use of a relatively large amount of the titanium catalyst, for example, 25 ppm of titanium, in order to produce the alicyclic polyester at an industrially satisfactory polymerization reaction rate (Japanese Patent Application Laid-open (KOKAI) No. 2004-169009). In addition, this method still tends to be insufficient and unsatisfactory in thermal stability of the resultant alicyclic polyesters and prevention of undesired coloration thereof upon alloying.

Further, there has been proposed the method of producing a resin composition comprising a polyester and a polycarbonate wherein the polyester is produced using a titanium catalyst in an amount of about 1 to about 30 ppm calculated as a titanium atom to prevent undesired coloration of the resultant resin composition (Japanese Patent Application Laid-open (KOEYO) No. 2005-521772). However, in this method, it is not described that an alkali earth metal compound is used in combination with titanium upon production of the polyester.

DISCLOSURE OF THE INVENTION

SUBJECT TO BE SOLVED BY THE INVENTION

An object of the present invention is to provide an alicyclic polyester which is suitable as an optical material and exhibits a less coloration, good thermal stability and hydrolysis stability and a less content of impurities or foreign matters.

MEANS FOR SOLVING THE SUBJECT

As a result of the present inventors' earnest study for solving the above problems, it has been found that alicyclic polyesters which is obtained from 1,4-CHDA and 1,4-CHDM as main raw materials, which have specific titanium and alkali earth metal concentrations and which exhibit specific properties such as an adequate intrinsic viscosity, are useful and excellent as an optical material. The present invention has been attained on the basis of the above finding.

That is, to accomplish the aim, in an aspect of the present invention, there is provided an alicyclic polyester produced from a dicarboxylic acid component comprising an alicyclic dicarboxylic acid as a main component and a diol component comprising an alicyclic diol as a main component using a titanium compound and an alkali earth metal compound as a polycondensation catalyst,
a content of titanium in the alicyclic polyester being not less than 1 ppm by weight and less than 25 ppm by weight, calculated as a titanium metal atom,
a ratio of an alkali earth metal (M) to titanium (Ti) (M/Ti) being 0.25 to 1.0, calculated as the respective metal atoms, and the alicyclic polyester having an intrinsic viscosity of not less than 0.4 dL/g.

In another aspect of the present invention, there is provided a process for producing an alicyclic polyester from a dicarboxylic acid component comprising an alicyclic dicarboxylic acid as a main component and a diol component comprising an alicyclic diol as a main component using a titanium compound and an alkali earth metal compound as a polycondensation catalyst, a content of titanium in the alicyclic polyester being not less than 1 ppm by weight and less than 25 ppm by weight, calculated as a titanium metal atom, a ratio of an alkali earth metal (M) to titanium (Ti) (M/Ti) being 0.25 to 1.0, calculated as the respective metal atoms, and the alicyclic polyester having an intrinsic viscosity of not less than 0.4 dL/g,
which process comprising using the alkali earth metal compound in the form of a solution in water or an organic solvent.

In the other aspect of the present invention, there is provided a resin composition comprising 1 to 99 parts by weight of the above alicyclic polyester and 99 to 1 parts by weight of a polycarbonate.

Further, the alicyclic polyesters according to the preferred embodiments of the present invention are characterized in that:

the alicyclic dicarboxylic acid is 1,4-cyclohexanedicarboxylic acid;
the alicyclic diol is 1,4-cyclohexanedimethanol;
the alicyclic polyester has a color tone b value of not more than 3;
the alicyclic polyester has a vinyl cyclohexene structure bonded to a terminal end of the polymer in an amount of less than 5 $\mu$mol/g;
the alicyclic polyester exhibits a viscosity retention rate $R_1$ of not less than 90% which rate is calculated according to the following formula (1):

$$\text{Viscosity Retention Rate } R_1 \ (\%)$$
$$= (IV_1/IV_0) \times 100 \qquad (1)$$

wherein $rv_0$ represents an intrinsic viscosity of the alicyclic polyester as produced; and $IV_1$ is an intrinsic viscosity of the alicyclic polyester obtained after treating the alicyclic polyester as produced at 280°C for 1 hr in a nitrogen atmosphere; a solution prepared by dissolving 2.0 g of the alicyclic polyester in 18.0 g of chloroform has a haze value of not more than 1.5% as measured in an optical path length of 10 mm;
the alicyclic polyester exhibits a viscosity retention rate $R_2$ of not less than 65% which rate is calculated according to the following formula (2):

$$\text{Viscosity Retention Rate } R_2 \ (\%)$$
$$= (IV_2/IV_0) \times 100 \qquad (2)$$

wherein $IV_0$ represents an intrinsic viscosity of the alicyclic polyester as produced and $IV_2$ is an intrinsic viscosity of the alicyclic polyester obtained after treating the alicyclic polyester as produced at 120°C for 24 hr under a gauge pressure of 111 kPa in a water vapor atmosphere; and

a content of a trans isomer in a cyclohexanedicarboxylic acid unit constituting the alicyclic polyester is not less than 85 mol%.

In addition, the resin composition according to the preferred embodiment of the present invention is characterized in that the composition further contains a phosphorus compound. Further, the process for producing an alicyclic polyester according to the preferred embodiment of the present invention is characterized in that the solution of the alkali earth metal compound in the organic solvent has a water content of not less than 2% by weight.

EFFECT OF THE INVENTION

The alicyclic polyester of the present invention can be formed into films, fibers, shaped products, etc., by various molding methods. In particular, the film formed from the alicyclic polyester exhibits a high transparency and a less coloration and, therefore, is very useful as an optical material. In addition, since the alicyclic polyester of the present invention exhibits a high thermal stability and a less reduction in molecular weight thereof upon molding, the molded product produced therefrom is excellent in mechanical properties. Further, the alicyclic polyester of the present invention has a less titanium content and contains an alkali earth metal, and, therefore, can be prevented from undergoing coloration when alloyed with other resins, thereby providing a useful material from industrial viewpoints.

PREFERRED EMBODIMENTS FOR CARRYING OUT THE INVENTION

The alicyclic polyester of the present invention can be produced by subjecting a dicarboxylic acid component and a diol component as raw materials to esterification reaction and then melt-polycondensation reaction. The dicarboxylic acid component used as the raw material contains an alicyclic dicarboxylic acid as a main component, and the diol component contains an alicyclic diol as a main component. Also, the titanium content in the alicyclic polyester of the present invention is not less than 1 ppm by weight and less than 25 ppm by weight, calculated as a titanium metal atom, and the ratio of alkali earth metal (M) to titanium (Ti) in the alicyclic polyester (M/Ti) is 0.25 to 1.0, calculated as the respective metal atoms, and the alicyclic polyester has an intrinsic viscosity of not less than 0.4 dL/g.

When the titanium content in the alicyclic polyester is less than 1 ppm by weight, the polymerization reaction rate tends to be too low. When the titanium content in the alicyclic polyester is not less than 25 ppm by weight, the resultant alicyclic polyester tends to be deteriorated in thermal stability, and increased in haze. In addition, by using titanium in combination with alkali earth metal as the catalyst, the resultant polyester can be improved in color tone thereof as compared to the case where the catalyst used comprises titanium solely. When the ratio of alkali earth metal (M) to titanium (Ti) in the catalyst (M/Ti) is less than 0.25, the effect of improving a color tone of the polyester tends to be lowered. When the ratio of alkali earth metal (M) to titanium (Ti) in the catalyst (M/Ti) is more than 1.0, the polymerization reaction rate tends to be very low. When the ratio of alkali earth metal (M) to titanium (Ti) in the catalyst (M/Ti) lies within the range of 0.25 to 1.0 as specified above, the resultant polyester can suitably exhibit a low haze.

Here, the dicarboxylic acid component containing the alicyclic dicarboxylic acid as a main component means that the content of the alicyclic dicarboxylic acid therein exceeds 50 mol% based on the whole amount of the dicarboxylic acid component. The content of the alicyclic dicarboxylic acid in the dicarboxylic acid component is preferably not less than 70 mol%, more preferably not less than 80 mol% and still more preferably not less than 90 mol% based on the whole amount of the dicarboxylic acid component. When the content of the alicyclic dicarboxylic acid in the dicarboxylic acid component is not more than 50 mol%, the resultant polyester tends to be deteriorated in optical properties.

Examples of the alicyclic dicarboxylic acid as the main component of the dicarboxylic acid component may include 1,2-, 1,3- or 1,4-cyclohexanedicarboxylic acid (1,4-CHDA), 1,4-, 1,5-, 2,6- or 2,7-decahydronaphthalenedicarboxylic acid, and the like. Among these alicyclic dicarboxylic acids, preferred is 1,4-CHDA because the compound is industrially readily available and the alicyclic polyester obtained therefrom has a molding temperature near the molding temperature of conventionally used ordinary polyesters, for example, polybutylene terephthalate. In this case, the percentage of a trans isomer to a sum of trans and cis isomers (trans isomer content) in a cyclohexanedicarboxylic acid unit derived from 1,4-CHDA constituting the resultant alicyclic polyester is not less than 85 mol%, preferably not less than 88 mol% and more preferably not less than 90 mol% in the consideration of a high heat resistance of the resultant polyester.

The 1,4-CHDA used as the raw material preferably contains the trans isomer in an amount of at least 85 mol% and more preferably at least 88 mol%. In the consideration of isomerization upon production of the polyester, the content of the trans isomer in the 1,4-CHDA is still more preferably not less than 90 mol% and further still more preferably not less than 95 mol%.

The content of metal impurities other than titanium and alkali earth metal in the 1,4-CHDA is preferably not more than 1 ppm by weight. The conventionally known 1,4'-CHDA contains a large amount of metal impurities which tend to cause problems such as disturbance of the aimed polymerization reaction and occurrence of undesired side reactions, resulting in poor color tone of the resultant polyester. To solve these problems, there has been proposed the method of using a large amount of a titanium compound as a catalyst, or the method of deactivating metal impurities by using a phosphorus compound, etc., as a stabilizer. However, the phosphorus compound tends to suppress an activity of the titanium catalyst. Therefore, it has still been required to use a large amount of the titanium compound as a catalyst. On the other hand, in the present invention, by using the 1,4-CHDA containing metal impurities in an amount of not more than 1 ppm by weight, it becomes possible to obtain an alicyclic polyester having a less coloration. The 1,4-CHDA containing not more than 1 ppm by weight of metal impurities and having a trans isomer content of not less than 85 mol% can be produced , for example, by subjecting a commercially available cis/trans mixture of 1,4-CHDA to thermal isomerization. The thermal isomerization may be conducted, for example, by the method described in Japanese Patent Application Laid-open (KOKAI) No. 2004-43426.

Examples of the dicarboxylic acid other than the above alicyclic dicarboxylic acid as a main component which may be contained in the dicarboxylic acid component may include aromatic dicarboxylic acids such as terephthalic acid, phthalic acid, isophthalic acid, 1,4-phenylenedioxydicarboxylic acid, 1,3-phenylenedioxydiacetic acid, 4,4'-diphenyldicarboxylic acid, 4,4'-diphenyletherdicarboxylic acid, 4,4'-diphenylketonedicarboxylic acid, 4,4'-diphenoxyethanedicarboxylic acid, 4,4'-diphenylsulfonedicarboxylic acid and 2,6-naphthalenedicarboxylic acid; and aliphatic dicarboxylic acids such as succinic acid, glutaric acid, adipic acid, pimelic acid, suberic acid, azelaic acid, sebacic acid, undecadicarboxylic acid and dodecadicarboxylic acid. These dicarboxylic acids may be used alone or in combination of any two or more thereof.

The diol component used in the alicyclic polyester of the present invention contains an alicyclic diol as a main component. The "diol component containing the alicyclic diol as a main component" means that the content of the alicyclic diol in the diol component is more than 50 mol% based on the whole amount of the diol component. The content of the alicyclic diol is preferably not less than 70 mol%, more preferably not less than 80 mol% and still more preferably not less than 90 mol% based on the whole amount of the diol component. When the content of the alicyclic diol in the diol component is not more than 50 mol%, the obtained alicyclic polyester tends to be deteriorated in optical properties.

Examples of the alicyclic diol as the main component may include five-membered ring diols such as 1,2- or 1,3-cyclopentanediol, 1,2- or 1,3-cyclopentanedimethanol and bis(hydroxymethyl)tricyclo[5.2.1.0]decane; and six-membered ring diols such as 1,2-, 1,3- or 1,4-cyclohexanediol, 1,2-, 1,3- or 1,4-cyclohexanedimethanol and 2,2-bis-(4-hydroxycyclohexyl)propane. Among these alicyclic diols, preferred is 1,2-, 1,3- or 1,4-cyclohexanedimethanol. In particular, 1,4-cyclohexanedimethanol (1,4-CHDM) is more preferred because of facilitated production of alicyclic polyesters having a high polymerization degree, alicyclic polyesters having a high glass transition point or the like. The 1,4-CHDM is usually in the form of a mixture of trans and cis isomers thereof, and the ratio of the trans isomer to the cis isomer in the 1,4-CHDM is usually 80:20 to 60:40.

Examples of the diol component other than the alicyclic diol as a main component may include aliphatic diols such as ethyleneglycol, propyleneglycol, butyleneglycol, trimethyleneglycol, pentamethyleneglycol, hexamethyleneglycol, octamethyleneglycol, decamethyleneglycol, neopentylglycol, diethyleneglycol, polyethyleneglycol, polytrimethyleneetherglycol and polytetramethyleneetherglycol; tricyclodecanedimethanol; and aromatic diols such as xylyleneglycol, 4,4'-hydroxybiphenyl, 2,2-bis(4'-hydroxyphenyl)propane, 2,2-bis(4'-β-hydroxyethoxyphenyl)propane, bis(4-hydroxyphenyl)sulfone and bis(4-β-hydroxyethoxyphenyl)sulfone. These diols may be used alone or in combination of any two or more thereof.

Further, the alicyclic polyester of the present invention may contain, if required, a small amount of a copolymerizable component in addition to the above dicarboxylic acid and diol components. Examples of the copolymerizable component may include hydroxycarboxylic or alkoxycarboxylic acids such as glycolic acid, p-hydroxybenzoic acid and p-β-hydroxyethoxybenzoic acid; and polyfunctional components having a three or more functionality such as tricarballylic acid, trimellitic acid, trimesic acid, pyromellitic acid, naphthalenetetracarboxylic acid, gallic acid, trimethylol ethane, trimethylol propane, glycerol, pentaerythritol and sugar esters. These copolymerizable components are useful for controlling a melt-viscosity of the resultant polyester and enhancing a moldability thereof.

The alicyclic polyester of the present invention can be produced from the dicarboxylic acid component containing the alicyclic dicarboxylic acid as a main component and the diol component containing the alicyclic diol as a main component by subjecting these components to esterification reaction and then polycondensation reaction. The molar ratio of the dicarboxylic acid component to the diol component used in the esterification reaction is from 102/100 to 150/100, preferably from 102/100 to 145/100. When the molar ratio of the dicarboxylic acid component to the diol component is less than 102/100, the polymer obtained after the polycondensation reaction tends to exhibit a high acid value at a terminal end thereof. On the other hand, when the molar ratio of the dicarboxylic acid component to the diol component is more than 150/100, the polymerizability of these components tends to be lowered, thereby sometimes failing to obtain an alicyclic polyester having a high intrinsic viscosity.

The amount of the titanium catalyst used for producing the alicyclic polyester of the present invention may be controlled such that the concentration of titanium contained in the resultant alicyclic polyester is not less than 1 ppm by weight and preferably not less than 3 ppm by weight, and less than 25 ppm by weight and preferably less than 22 ppm by weight, calculated as a titanium metal atom. The titanium catalyst can function not only as the polycondensation reaction catalyst but also as the esterification catalyst for the reaction between the dicarboxylic acid component and the diol component. In the esterification reaction, the titanium catalyst may be used in such an amount that the titanium content in the resultant polyester lies within the above-specified suitable range.

Examples of the titanium compound used as the titanium catalyst may include tetraalkyl(or aryl) titanates such as tetra-n-propyl titanate, tetraisopropyl titanate, tetra-n-butyl titanate, tetraisobutyl titanate, tetra-tert-butyl titanate, tetracyclohexyl titanate, tetraphenyl titanate and tetrabenzyl titanate; and other titanium compounds such as lithium oxalate titanate, potassium oxalate titanate, ammonium oxalate titanate and titanium oxides.

Further, as the titanium catalyst, there may also be used reaction products obtained by reacting an orthoester or condensed orthoester of titanium with a hydroxycarboxylic acid, reaction products obtained by reacting an orthoester or condensed orthoester of titanium, a hydroxycarboxylic acid and a phosphorus compound with each other, and reaction products obtained by reacting an orthoester or condensed orthoester of titanium, a polyhydric alcohol having at least two hydroxyl groups, and 2-hydroxycarboxylic acid or base with each other.

Among these titanium catalysts, preferred are tetraalkyl titanates such as tetra-n-butyl titanate.

In addition to the above titanium compound, the catalyst used for producing the alicyclic polyester of the present invention contains a compound of alkali earth metal such as magnesium, calcium, strontium and barium. Among these alkali earth metal compounds, magnesium compounds are especially preferred because of good effect of improving a color tone of the resultant polyester. The amount of the alkali earth metal (M) compound used may be adjusted such that the weight ratio of alkali earth metal to titanium (M/Ti) in the resultant polyester is 0.25 to 1.0 and preferably 0.3 to 0.9, calculated as the respective metal atoms.

Examples of the alkali earth metal compounds may include carbonates, hydroxides, oxides, organic acid salts such as acetates, and alkoxides of magnesium, calcium, strontium, barium, etc. Among these alkali earth metal compounds, preferred are magnesium compounds. Specific examples of the preferred magnesium compounds may include magnesium acetate, magnesium hydroxide, magnesium carbonate, magnesium oxide and magnesium alkoxide. Among these magnesium compounds, especially preferred is magnesium acetate.

In addition, the alicyclic polyester of the present invention is essentially required to have an intrinsic viscosity (IV) of not less than 0.4 dL/g. When the intrinsic viscosity of the alicyclic polyester is less than 0.4 dL/g, the resultant alicyclic polyester tends to be deteriorated in moldability owing to too low melt-viscosity thereof upon molding, and the obtained molded product tends to be insufficient in mechanical strength. The upper limit of the intrinsic viscosity of the alicyclic polyester may vary depending upon an upper limit of a moldable melt-viscosity upon melt-molding, and is usually not more than 2.00 dL/g.

The alicyclic polyester of the present invention exhibits a viscosity retention rate $R_1$ of preferably not less than 90% and more preferably not less than 92% which rate is calculated according to the following formula (1):

$$\text{Viscosity Retention Rate } R_1 \text{ (\%)}$$

$$= (IV_1/IV_0) \times 100 \qquad (1)$$

wherein $IV_0$ represents an intrinsic viscosity of the alicyclic polyester as produced; and $IV_1$ is an intrinsic viscosity of the alicyclic polyester obtained after treating the alicyclic polyester as produced at 280°C for 1 hr in a nitrogen atmosphere (hereinafter occasionally referred to as a "heat resistance test").

In general, it is known that when a titanium content in a polyester is 25 to 100 ppm by weight, a viscosity retention rate of the polyester lies within the range of from not less than 80% to less than 90%. Since the titanium content in the alicyclic polyester of the present invention is as low as less than 25 ppm by weight, the alicyclic polyester can exhibit a high viscosity retention rate, a very excellent thermal stability and a less deterioration upon molding, thereby providing a molded product having a high quality.

Further, the alicyclic polyester of the present invention exhibits a viscosity retention rate $R_2$ of preferably not less than 65% and more preferably not less than 70% which rate is calculated according to the following formula (2):

$$\text{Viscosity Retention Rate } R_2 \text{ (\%)}$$

$$= (IV_2/IV_0) \times 100 \qquad (2)$$

wherein $IV_0$ represents an intrinsic viscosity of the alicyclic polyester as produced; and $IV_2$ is an intrinsic viscosity of the alicyclic polyester obtained after treating the alicyclic polyester as produced at 120°C for 24 hr under a gauge pressure of 111 kPa in a water vapor atmosphere (hereinafter occasionally referred to as a "hydrolysis resistance test").

When the viscosity retention rate is not less than the above-specified value, the alicyclic polyester can exhibit a good hydrolysis resistance.

The alicyclic polyester of the present invention preferably has a color tone b value of not more than 3 and more preferably not more than 2. When the color tone b value is more than 3, the resultant alicyclic polyester tends to show an increased yellowness and, therefore, be unsuitable as an optical material. The color tone b value used herein means a b value of chromaticity coordinates of a Hunter's color difference formula in a Lab color specification system as prescribed in Reference 1 of JIS Z8730.

The alicyclic polyester of the present invention contains a vinyl cyclohexene structure at a terminal end of the polymer in an amount of preferably less than 5 $\mu$mol/g and more preferably less than 3 $\mu$mol/g. When the content of the terminal vinyl cyclohexene structure in the alicyclic polyester is not less than 5 $\mu$mol/g, the resultant alicyclic polyester tends to be deteriorated in thermal stability upon melting, in particular, tends to exhibit a large change in color tone (yellowing) upon melting, and further have a poor hydrolysis resistance. It is considered that the terminal vinyl cyclohexene structure is produced owing to thermal decomposition. Therefore, to avoid production of the terminal vinyl cyclohexene structure, it is preferred that the polycondensation reaction is completed for a short period of time, or conducted at a temperature of not more than 270°C, in particular, not more than 255°C. In addition, the thus produced vinyl cyclohexene structure has no contribution to the polymerization reaction, so that it may be difficult to obtain a high-molecular weight polymer.

A solution prepared by dissolving 2.0 g of the alicyclic polyester of the present invention in 18.0 g of chloroform has a haze value of preferably not more than 1.5% and more preferably not more than 1.2%. The low haze value of the solution means that the polymer contains a less amount of impurities. Therefore, the haze value is important in the consideration of applying the polyester to optical materials. The haze value of the solution used herein is a value measured by the below-mentioned method.

The alicyclic polyester of the present invention is preferably produced from 1,4-CHDA as the raw dicarboxylic acid component and 1,4-CHDM as the raw diol component. Also, in the alicyclic polyester of the present invention, the trans isomer content in the cyclohexane dicarboxylic acid unit derived from 1,4-CHDA is preferably not less than 85 mol% and more preferably not less than 88 mol%. When the trans isomer content is less than 85 mol%, the resultant alicyclic polyester tends to be deteriorated in heat resistance.

The alicyclic polyester of the present invention is excellent in transparency and heat resistance and, therefore, can be used in combination with other resins to form a resin composition. In particular, when the alicyclic polyester is used in combination with a polycarbonate resin, it is possible to provide an excellent resin composition which is free from deterioration in color tone and reduction in molecular weight.

According to the second aspect of the present invention, there is provided a resin composition comprising 1 to 99 parts by weight of the alicyclic polyester of the present invention and 99 to 1 parts by weight of a polycarbonate. The ratio between contents of the alicyclic polyester and the polycarbonate in the resin composition may be appropriately determined according to applications or purposes of the resultant resin composition, and the alicyclic polyester is preferably contained therein in an amount of 10 to 50 parts by weight and more preferably 20 to 40 parts by weight.

The resin composition of the present invention may also contain a phosphorus compound. The phosphorus compound has the effect of improving a color tone of the resultant resin composition. The amount of the phosphorus compound used in the resin composition may be adjusted such that the molar ratio of the phosphorus compound (calculated as phosphorus atom) to titanium derived from the Ti catalyst in the alicyclic polyester (calculated as a titanium metal atom) is at least 10:1, thereby more remarkably exhibiting the above color tone-improving effect. The molar ratio of the phosphorus compound to titanium (P/Ti) is usually 10:1 to 1000:1 and preferably 10:1 to 500:1, calculated as the respective metal atoms.

The phosphorus compound may be added upon blending the alicyclic polyester and the polycarbonate resin with each other. When the polycondensation reaction of the alicyclic polyester is conducted in the presence of the phosphorus compound as a stabilizer, the resultant reaction mixture may be directly used for production of the resin composition.

The phosphorus compound is not particularly limited. Examples of the phosphorus compound may include phosphoric acid and phosphoric esters such as trimethyl phosphate, triethyl phosphate, phenyl phosphate and triphenyl phosphate; phosphorous acid and phosphorous esters such as trimethyl phosphite, triphenyl phosphite, tris(2,4-t-butylphenyl)phosphite and tetrakis(2,4-t-butylphenyl)phosphite; acid phosphates such as monoethyl acid phosphate, diethyl acid phosphate, monostearyl acid phosphate and distearyl acid phosphate; phosphonic acid compounds such as dimethyl methylphosphonate, diphenyl methylphosphonate, dimethyl phenylphosphonate, diethyl phenylphosphonate, diphenyl phenylphosphonate, dimethyl benzylphosphonate and diethyl benzylphosphonate; phosphinic acid compounds such as diphenylphosphinic acid, methyl diphenylphosphinate, phenyl diphenylphosphinate, phenylphosphinic acid, methyl phenylphosphinate and phenyl phenylphosphinate; phosphine oxide compounds such as diphenyl phosphine oxide, methyl diphenyl phosphine oxide, triphenyl phosphine oxide and triphenyl phosphopropionate; phosphonous acid compounds;

phosphinous acid compounds; phosphine compounds; and phosphonium betaine compounds. Among these phosphorus compounds, preferred are phosphoric acid, phosphoric esters and acid phosphates, and more preferred are acid phosphates.

The alicyclic polyester of the present invention exhibits a good compatibility with other thermoplastic resins, in particular, polycarbonates. Upon blending the alicyclic polyester with the other thermoplastic resins, in order to improve mechanical properties, etc., of the resultant resin composition, various components such as a catalyst deactivator, an ultraviolet absorber, an impact absorber constituted from a core made of a rubber component and a shell made of an acrylic polymer component, polyether ester elastomers, polyether imide ester elastomers, polyolefins, ABS resins, polyacrylate, olefin-acrylate copolymers, polyacrylates and silicone oils may be added thereto.

The resin composition of the present invention may be produced by known methods for production of ordinary thermoplastic resin compositions. For example, the resin composition may be produced by previously mixing the alicyclic polyester, the polycarbonate and optionally added other components with each other, and then melt-kneading the obtained mixture using a reactor equipped with agitation blades, a Banbury mixer, rolls, a Brabender, a single-screw extruder, a twin-screw extruder, a kneader, etc.

The alicyclic polyester of the present invention is produced by subjecting the above dicarboxylic acid component and diol component as the raw materials to esterification reaction and then melt-polycondensation reaction as described above. The production method may be conducted according to known methods used for production of ordinary polyesters.

In the preferred production method, for example, the esterification reaction may be conducted by charging the raw dicarboxylic acid component and the diol component into an esterification reaction vessel equipped with a stirrer and a distillation pipe, and stirring these components under an inert gas atmosphere while distilling off water produced during the reaction. The titanium compound as the catalyst may be added either upon charging the raw materials or in the course of the esterification reaction. Alternatively, the whole esterification reaction step may be conducted in the absence of the titanium compound. In this case, the titanium compound may be added at the stage between after completion of the esterification reaction and before initiation of the melt-polycondensation reaction.

Titanium alcoholate may be added in the form of a solution in an organic solvent such as ethyleneglycol and 1,4-butanediol. The magnesium compound, in particular, magnesium acetate, is preferably added in the form of an aqueous solution thereof, or may be added in the form of a solution in an organic solvent such as ethyleneglycol and 1,4-butanediol. When the alkali earth metal compound is dissolved in the organic solvent, a water content in the resultant solution is preferably not less than 2.0% by weight. When the water content in the solution is not less than 2.0% by weight, the alkali earth metal compound can be inhibited from being precipitated in the solution, and can be more uniformly dispersed in the polyester, resulting in low haze and good transparency of the resultant polyester. In the esterification reaction, the alkali earth metal compound is preferably added before addition of the titanium compound, or may also be added before initiation of the esterification reaction. The upper limit of the water content in the above solution is not particularly limited, and is usually 50% by weight.

The esterification reaction temperature is usually 150 to 230°C and preferably 150 to 220°C, the esterification reaction pressure is usually 100 to 110 kPa (gauge pressure), and the esterification reaction time is usually from 10 min to 10 hr and preferably from 30 min to 5 hr.

After completion of the esterification reaction, the obtained esterification reaction product is transferred into a polycondensation reaction vessel equipped with a stirrer and a distillation pipe where the reaction product is subjected to melt-polycondensation reaction while gradually reducing an inside pressure of the reaction vessel. If required, by fitting a pressure-reducing device to the esterification reaction vessel, the esterification reaction and the melt-polycondensation reaction may be conducted within one reaction vessel.

The melt-polycondensation reaction may be conducted at a temperature not lower than the temperature upon completion of the esterification reaction, especially not more than 270°C and preferably not more than 265°C under such a pressure that an inside pressure of the reaction vessel is reduced from normal pressure to finally not more than 133 Pa (absolute pressure) and preferably not more than 67 Pa (absolute pressure) for a period of from 10 min to 10 hr and preferably from 30 min to 7 hr, thereby producing a polyester having an intrinsic viscosity (IV) of not less than 0.4 dL/g. When the polycondensation reaction is conducted at a temperature of not more than 270°C, preferably not more than 265°C and more preferably not more than 260°C, the resultant polyester can be prevented from suffering from undesired coloration and production of the terminal vinyl cyclohexene structure. After completion of the polycondensation reaction, the obtained polycondensation reaction product (polyester) is withdrawn from a bottom of the reaction vessel usually in the form of a strand, and the strand is cooled with water and then cut into pellets. Meanwhile, a series of the reactions may be performed by either a batch method or a continuous method.

The alicyclic polyester and/or the resin composition according to the present invention may be blended with various additives, if required. Examples of the additives may include inorganic fillers such as glass beads, glass powders, glass balloons, mica, talc and calcium carbonate, antioxidants, heat stabilizers, ultraviolet absorbers, neutralizing agents, lubricants, compatilizing agents, antifogging agents, anti-blocking agents, plasticizers such as paraffin oils, fluororesin powders, slip agents, dispersants, colorants, bactericides and fluorescent brighteners.

EXAMPLES

The present invention is described in more detail by the following examples. However, these examples are only illustrative and not intended to limit the scope of the present invention. The methods for evaluating various properties of the alicyclic polyester of the present invention are described below.

[Evaluation methods]

<u>1. Amounts of titanium and magnesium in alicyclic polyester></u>

12 mL of sulfuric acid was added to 2.5 g of a sample (alicyclic polyester) and then 25 mL of an aqueous hydrogen peroxide solution was added thereto to decompose the sample. The obtained decomposition product was mixed with pure water to adjust a total volume to 50 mL. Thereafter, the resultant reaction solution was analyzed using a ICP emission spectrophotometer "JY138U" manufactured by Horiba Seisakusho Co., Ltd.

<u>2. Intrinsic viscosity (IV)></u>

Pellets of the alicyclic polyester were dissolved in a mixed solvent containing phenol and tetrachloroethane at a weight ratio of 1:1, and the viscosity of the resultant solution was measured at 30°C using an Ubbelohde viscometer.

<u>3. Color tone b value></u>

A cylindrical cell for powder colorimetry having an inner diameter of 30 mm and a depth of 13 mm was fully filled with polyester pellets as a sample to measure its b value of chromaticity coordinates of a Hunter's color difference formula in a Lab color specification system as prescribed in Reference 1 of JIS Z8730 by a reflection method using a differential colorimeter "Color Meter ZE2000" manufactured by Nippon Denshoku Kogyo Co., Ltd. The b value was measured at 4 positions while rotating the cell every 90° to determine a simple average of the measured values.

<u>4. Amount of terminal vinyl cyclohexene structure></u>

This is measured by NMR method. Using a heavy chloroform solvent, a proton NMR spectrum of the sample was measured using a spectrometer "AV400M" manufactured by BRUKER Inc. The analysis was conducted using tetramethyl silane as a standard substance, and a peak observed near 4.6 ppm was regarded as that attributed to proton of the terminal vinyl cyclohexene structure, whereby the terminal vinyl cyclohexene structure was quantitatively determined on the basis of an integral value thereof.

<u>5. solution haze value></u>

2.0 g of alicyclic polyester pellets were dissolved in 18.0 g of chloroform at room temperature for 30 min, and then the resultant solution was conditioned in a constant-temperature water bath maintained at $30 \pm 1$°C for 15 min. The thus conditioned solution was placed in a cell having an optical path length of 10 mm to measure a haze value thereof using a haze meter "SM Color Computer SM-5-IS-2B" manufactured by Suga Testing Machine Co., Ltd. The thus measured haze value was determined as the solution haze value (%).

<u>6. Amount of trans isomer in cyclohexanedicarboxylic acid unit in polyester></u>

This is measured by the same NMR method as defined in the above (4). The ratio between contents of a cis isomer observed near 2.5 ppm and a trans isomer observed near 2.3 ppm was determined and expressed by percent (%).

<u>7. Evaluation of heat resistance: $\Delta$b and viscosity retention rate $R_1$></u>

A branched test tube was filled with 10 g of alicyclic polyester pellets and closed with a rubber plug. The pellets filled in the test tube were heated to 100°C using an oil bath and vacuum-dried for 5 hr. The branched test tube was lifted up from the oil bath, and the temperature of the oil bath was raised to 280°C. After introducing nitrogen into the branched test tube to restore an inside pressure thereof and keep an interior thereof under a sealed condition, the test tube was immersed again in the oil bath heated to 280°C to heat-treat the polyester therein for 1 hr. The resin was withdrawn from a bottom of the branched test tube into water in the form of a strand, and then the strand was formed into pellets. The color tone b value of the resultant polyester pellets was measured, and the difference between the thus measured b value and that measured before initiation of the heat resistance test was expressed by $\Delta b$. The smaller the $\triangle b$, the more excellent the heat resistance of the polyester. In addition, after the polyester pellets obtained after being heat-treated at 280°C for 1 hr were dried at 100°C for 5 hr using a vacuum dryer, the intrinsic viscosity thereof was measured to calculate a viscosity retention rate $R_1$ thereof according to the above formula (1).

<u>8. Hydrolysis resistance: viscosity retention rate $R_2$</u>

10 g of alicyclic polyester pellets were placed in a pressure cracker "PC-242 Model" manufactured by Hirayama Seisakusho Co., Ltd., and treated therein at 120°C under 111 kPa (gauge pressure) in a water vapor atmosphere for 24 hr. The thus treated polyester pellets were vacuum-dried at 100°C for 5 hr. The intrinsic viscosity of the thus obtained polyester pellets was measured, and the viscosity retention rate $R_2$ thereof was calculated according to the above formula (2).

<u>Example 1:</u>

A reactor equipped with a stirrer, a distillation pipe and a pressure-reducing device was charged with 160 g of 1,4-CHDM, 2.6 g of a 1% aqueous solution of magnesium acetate tetrahydrate and 184 g of 1,4-CHDA, and the contents of the reactor were stirred and mixed with each other. Further, 0.36g of a 6% 1,4-butanediol solution of tetra-n-butyl titanate (TBT) was charged into the reactor, and the contents of the reactor were heated to 180°C under a nitrogen flow and reacted with each other at 180°C for 2 hr. Thereafter, the reaction mixture was heated to 220°C for 1 hr to conduct an esterification reaction thereof. Successively, the reaction mixture was heated from 220°C to 250°C for 1.5 hr while simultaneously gradually reducing an inside pressure of the reactor, thereby conducting a polycondensation reaction thereof. After conducting the polymerization reaction in the reactor under an inside pressure of 67 Pa at 250°C for a period of 3 hr and 46 min from initiation of reducing the inside pressure, the resultant polyester was withdrawn from a bottom of the reactor into water in the form of a strand, and the strand was cut into pellets. The thus obtained polyester pellets were dried at 100°C for 5 hr using a vacuum dryer. As a result, it was confirmed that the obtained polyester had an intrinsic viscosity (IV) of 0.679 dL/g, a color tone b value of 0.8 and a solution haze value of 0.4%.

The polyester pellets were treated in a nitrogen atmosphere at 280°C for 1 hr (heat resistance test), and also treated in a water vapor atmosphere under 111 kPa (gauge pressure) at 120°C for 24 hr (hydrolysis resistance test) to measure respective intrinsic viscosity values $(IV_1)$ and $(IV_2)$. As a result, it was confirmed that the polyester obtained after the heat resistance test exhibited a rate of increase in the b value, i.e., a $\Delta b$ value of 2.5 and a viscosity retention rate $R_1$ of 92.0%, whereas the polyester obtained after the hydrolysis resistance test exhibited a viscosity retention rate $R_2$ of 77.8%.

The results of measurement of properties of the polyester together with the other properties are shown in Table 1.

<u>Examples 2 to 4 and Comparative Examples 1 to 3:</u>

The same procedure as defined in Example 1 was conducted except that the amount of 1,4-CHDM, the amount of a 6% 1,4-butanediol solution of TBT added, the amount of a 1% magnesium acetate aqueous solution added, and the polymerization time were changed as shown in Tables 1 and 2. The intrinsic viscosity (IV), color tone b value, amount of terminal vinyl cyclohexene, trans isomer content in CHDA unit, $\Delta b$, viscosity retention rates $R_1$ and $R_2$, solution haze value, etc., of the respective obtained polyesters are shown in Tables 1 and 2.

<u>Example 5:</u>

The same procedure as defined in Example 4 was conducted except that the amount of 1,4-CHDM was changed from 160 g to 158 g, and 1.3 g of the 1% aqueous solution of magnesium acetate tetrahydrate was replaced with 1.3 g of a 1% 1,4-butanediol solution of magnesium acetate tetrahydrate (water content: 5%). The intrinsic viscosity (IV), color tone b value, amount of terminal vinyl cyclohexene, trans isomer content in CHDA unit, $\Delta b$, viscosity retention rates $R_1$ and $R_2$, solution haze value, etc., of the obtained polyester are shown in Table 1.

Table 1

| Items | Unit | Examples | | | | |
|---|---|---|---|---|---|---|
| | | 1 | 2 | 3 | 4 | 5 |
| 1,4-CHDM | g | 160 | 156 | 156 | 160 | 158 |
| 6% TBT solution | g | 0.36 | 0.71 | 0.85 | 0.36 | 0.36 |

(continued)

| Items | Unit | Examples | | | | |
|---|---|---|---|---|---|---|
| | | 1 | 2 | 3 | 4 | 5 |
| 1% aqueous solution of Mg acetate tetrahydrate | g | 2.6 | 2.6 | 5.2 | 1.3 | Note 1) |
| Ti concentration in polyester | ppm by weight | 10 | 20 | 24 | 10 | 10 |
| Mg concentration in polyester | ppm by weight | 10 | 10 | 20 | 5 | 5 |
| Ratio Mg/Ti | - | 1.0 | 0.5 | 0.8 | 0.5 | 0.5 |
| Polymerization time | hr:min | 3:46 | 3:20 | 3:42 | 2:50 | 2:50 |
| Intrinsicviscosity (IV) | dL/g | 0.679 | 0.991 | 1.071 | 0.603 | 0.626 |
| Color tone (b value) | - | 0.8 | 2.9 | 2.2 | 1.9 | 1.8 |
| Terminal vinyl cyclohexene structure | $\mu$mol/g | 3 | 2 | 2 | 2 | 2 |
| Amount of trans isomer in CHDA | % | 90 | 89 | 90 | 90 | 90 |
| Heat resistance test: viscosity retention rate $R_1$ | % | 92.0 | 91.2 | 90.6 | 95.1 | 94.7 |
| Change in color tone ($\Delta$b value) | - | 2.5 | 1.5 | 1.7 | 2.6 | 2.4 |
| Hydrolysis resistance test: viscosity retention rate $R_2$ | % | 77.8 | 70.7 | 63.5 | 68.7 | 66.5 |
| Solution haze value | % | 0.4 | 0.2 | 0.6 | 0.7 | 1 |
| Note: 1): 1.3 g of a 1% 1,4-butanediol solution of magnesium acetate tetrahydrate (water content: 5%) was added. | | | | | | |

Table 2

| Items | Unit | Comparative Examples | | |
|---|---|---|---|---|
| | | 1 | 2 | 3 |
| 1,4-CHDM | g | 156 | 156 | 157 |
| 6% TBT solution | g | 0.89 | 0.71 | 0.85 |
| 1% aqueous solution of Mg acetate tetrahydrate | g | 1.3 | 6.5 | 0 |
| Ti concentration in polyester | ppm by weight | 25 | 20 | 24 |
| Mg concentration in polyester | ppm by weight | 5 | 25 | 0 |
| Ratio Mg/Ti | - | 0.2 | 1.3 | 0 |
| Polymerization time | hr:min | 2:42 | 5:00 | 3:30 |
| Intrinsic viscosity (IV) | dL/g | 1.015 | 0.922 | 0.907 |
| Color tone (b value) | - | 3.2 | 1.9 | 3.4 |
| Terminal vinyl cyclohexene structure | $\mu$mol/g | 2 | 6 | 2 |
| Amount of trans isomer in CHDA | % | 89 | 84 | 89 |
| Heat resistance test: viscosity retention rate $R_1$ | % | 91.5 | 89-3 | 91.8 |
| Change in color tone ($\Delta$b value) | - | 0.8 | 3.8 | 2.8 |
| Hydrolysis resistance test: viscosity retention rate $R_2$ | % | 66.8 | 56.5 | 69.2 |
| Solution haze value | % | 3.7 | 5.5 | 1.8 |

Example 6:

30 g of the alicyclic polyester produced in the Example 1, 70 g of a polycarbonate "Iupiron S-3000FN" produced by Mitsubishi Engineering-Plastics Corporation and 0.03 g of "ADEKASTAB AX-71" (mixture of monostearyl acid phosphate and distearyl acid phosphate) produced by ADEKA Co., Ltd., were weighed and charged into the same reactor as used in Examples 1, and mixed with each other under 100 Pa at 280°C for 20 minutes while stirring. As a result, it was confirmed that the obtained resin composition suitably exhibited an intrinsic viscosity of 0.685 dL/g and a color tone b value of 2.5.

Comparative Example 4:

The same procedure as defined in Example 1 was conducted except that 184 g of 1,4-CHDA was replaced with 214 g of 1,4-DMCD. As a result, it was confirmed that the polymerization reaction failed to smoothly proceed, and it was not possible to withdraw the obtained polyester into a strand shape.

**Claims**

1. An alicyclic polyester produced from a dicarboxylic acid component comprising an alicyclic dicarboxylic acid as a main component and a diol component comprising an alicyclic diol as a main component using a titanium compound and an alkali earth metal compound as a polycondensation catalyst,
a content of titanium in the alicyclic polyester being not less than 1 ppm by weight and less than 25 ppm by weight, calculated as a titanium metal atom,
a ratio of an alkali earth metal (M) to titanium (Ti) (M/Ti) being 0.25 to 1.0, calculated as the respective metal atoms, and the alicyclic polyester having an intrinsic viscosity of not less than 0.4 dL/g.

2. An alicyclic polyester according to claim 1, wherein the alicyclic dicarboxylic acid is 1,4-cyclohexanedicarboxylic acid.

3. An alicyclic polyester according to claim 1 or 2, wherein the alicyclic diol is 1,4-cyclohexanedimethanol.

4. An alicyclic polyester according to any one of claims 1 to 3, wherein the alicyclic polyester has a color tone b value of not more than 3.

5. An alicyclic polyester according to any one of claims 1 to 4, wherein the alicyclic polyester has a vinyl cyclohexene structure bonded to a terminal end of the polymer in an amount of less than 5 $\mu$mol/g.

6. An alicyclic polyester according to any one of claims 1 to 5, wherein a percentage of a trans isomer in a cyclohexanedicarboxylic acid unit constituting the alicyclic polyester is not less than 85 mol%.

7. An alicyclic polyester according to any one of claims 1 to 6, wherein the alicyclic polyester exhibits a viscosity retention rate $R_1$ of not less than 90% which rate is calculated according to the following formula (1):

$$\text{Viscosity Retention Rate } R_1 \text{ (\%)}$$

$$= (IV_1/IV_0) \times 100 \qquad (1)$$

wherein $IV_0$ represents an intrinsic viscosity of the alicyclic polyester as produced; and $IV_1$ is an intrinsic viscosity of the alicyclic polyester obtained after treating the alicyclic polyester as produced at 280°C for 1 hr in a nitrogen atmosphere.

8. An alicyclic polyester according to any one of claims 1 to 7, wherein the alicyclic polyester exhibits a viscosity retention rate $R_2$ of not less than 65% which rate is calculated according to the following formula (2):

$$\text{Viscosity Retention Rate } R_2 \text{ (\%)}$$

$$= (IV_2/IV_0) \times 100 \qquad (2)$$

wherein $IV_0$ represents an intrinsic viscosity of the alicyclic polyester as produced; and $IV_2$ is an intrinsic viscosity of the alicyclic polyester obtained after treating the alicyclic polyester as produced at 120°C for 24 hr under a gauge pressure of 111 kPa in a water vapor atmosphere.

9. An alicyclic polyester according to any one of claims 1 to 8, wherein a solution prepared by dissolving 2.0 g of the alicyclic polyester in 18.0 g of chloroform has a haze value of not more than 1.5% as measured in an optical path length of 10 mm.

10. A process for producing an alicyclic polyester from a dicarboxylic acid component comprising an alicyclic dicarboxylic acid as a main component and a diol component comprising an alicyclic diol as a main component using a titanium compound and an alkali earth metal compound as a polycondensation catalyst, a content of titanium in the alicyclic polyester being not less than 1 ppm by weight and less than 25 ppm by weight, calculated as a titanium metal atom, a ratio of an alkali earth metal (M) to titanium (Ti) (M/Ti) being 0.25 to 1.0, calculated as the respective metal atoms, and the alicyclic polyester having an intrinsic viscosity of not less than 0.4 dL/g, which process comprising using the alkali earth metal compound in the form of a solution in water or an organic solvent.

11. A process according to claim 10, wherein the solution of the alkali earth metal compound in the organic solvent has a water content of not less than 2% by weight.

12. A resin composition comprising 1 to 99 parts by weight of the alicyclic polyester as defined in any one of claims 1 to 9, and 99 to 1 parts by weight of a polycarbonate.

13. A resin composition according to claim 12, further comprising a phosphorus compound.

<div align="center">

**INTERNATIONAL SEARCH REPORT**

</div>

| International application No. |
| --- |
| PCT/JP2006/313476 |

A. CLASSIFICATION OF SUBJECT MATTER
*C08G63/199*(2006.01)i, *C08G63/85*(2006.01)i, *C08L67/02*(2006.01)i, *C08L69/00* (2006.01)i

According to International Patent Classification (IPC) or to both national classification and IPC

B. FIELDS SEARCHED

Minimum documentation searched (classification system followed by classification symbols)
C08G63/199, C08G63/85, C08L67/02, C08L69/00

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
| --- | --- | --- |
| P,A | JP 2006-028318 A (Mitsubishi Chemical Corp.), 02 February, 2006 (02.02.06), Full text (Family: none) | 1-13 |
| A | JP 2005-154619 A (Mitsubishi Chemical Corp.), 16 June, 2005 (16.06.05), Full text (Family: none) | 1-13 |
| A | JP 2004-511594 A (Eastman Chemical Co.), 15 April, 2004 (15.04.04), Full text & WO 2002/031020 A2      & US 2002/132963 A1 & EP 1325055 A2           & BR 2001/13910 A & CN 1468272 A | 1-13 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 06 September, 2006 (06.09.06) | Date of mailing of the international search report 12 September, 2006 (12.09.06) |
| --- | --- |
| Name and mailing address of the ISA/ Japanese Patent Office | Authorized officer |
| Facsimile No. | Telephone No. |

Form PCT/ISA/210 (second sheet) (April 2005)

<div align="center">

14

</div>

**INTERNATIONAL SEARCH REPORT**

| International application No. |
|---|
| PCT/JP2006/313476 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-217721 A (Mitsubishi Chemical Corp.), 05 August, 2004 (05.08.04), Full text (Family: none) | 1-13 |
| A | JP 2004-169009 A (Mitsubishi Chemical Corp.), 17 June, 2004 (17.06.04), Full text & WO 2004/039860 A1 & EP 1557439 A1 & US 2005/197484 A1 & AU 2003/275715 A1 | 1-13 |
| A | JP 2000-290356 A (Kuraray Co., Ltd.), 17 October, 2000 (17.10.00), Full text (Family: none) | 1-13 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5986040 A
- JP 53025696 A
- JP 2004169009 A
- JP 2005521772 A
- JP 2004043426 A